# EUROPÄISCHE PATENTSCHRIFT

(11) **EP 2 714 524 B1**
(45) Veröffentlichungstag und Bekanntmachung des Hinweises auf die Patenterteilung: **23.11.2016**
(21) Anmeldenummer: 12723428.4
(22) Anmeldetag: 15.05.2012
(51) Int. Cl.: B29C 65/08, B29C 65/78, B29C 65/00, B29C 65/02, B65H 23/02, B65B 57/04, B65B 9/20, B65B 41/18, B65B 51/26

(54) **VERFAHREN ZUR ERFASSUNG DER QUERPOSITION VON EINEM PACKSTOFF, INSBESONDERE EINER FOLIENVERPACKUNG, SOWIE ENTSPRECHENDE VORRICHTUNG UND ENTSPRECHENDER PACKSTOFF**
METHOD FOR DETECTING THE TRANSVERSE POSITION OF A PACKAGING MATERIAL, IN PARTICULAR A FILM WRAPPING, AND CORRESPONDING DEVICE AND CORRESPONDING PACKAGING MATERIAL
PROCÉDÉ DE DÉTECTION DE LA POSITION TRANSVERSALE D'UN MATÉRIAU D'EMBALLAGE, EN PARTICULIER D'UN EMBALLAGE FILMÉ ET MACHINE CORRESPONDANTE ET MATÉRIAU D'EMBALLAGE CORRESPONDANT

(30) Priorität: 03.06.2011 DE 102011076922
(43) Veröffentlichungstag der Anmeldung: 09.04.2014
(73) Patentinhaber: Robert Bosch GmbH, 70442 Stuttgart (DE)
(72) Erfinder: WIPF, Alfred, 79798 Jestetten (DE); HUTTER, Hansjoerg, CH-8216 Oberhallau (CH); WEHRLI, Markus, CH-8203 Schaffhausen (CH)
(86) Internationale Anmeldenummer: PCT/EP2012/059047
(87) Internationale Veröffentlichungsnummer: WO 2012/163673

(56) Entgegenhaltungen:
- EP-A2- 0 142 461
- WO-A1-2004/045953
- WO-A1-2006/013171
- US-A1- 2010 112 916

## Beschreibung

### TECHNISCHES GEBIET

Die vorliegende Erfindung betrifft ein Verfahren zur Erfassung der Querposition von mindestens einem Siegelabschnitt an einem Packstoff, insbesondere einer Folienverpackung, und/oder der Querposition des Packstoffs selbst gemäss dem Oberbegriff von Anspruch 1, sowie eine Vorrichtung gemäss dem Oberbegriff von Anspruch 9.

### STAND DER TECHNIK

Eine Schlauchpackung wird typischerweise durch eine endlose Folie bereitgestellt, wobei diese um ein zu verpackendes Produkt zu einem Schlauch geformt und mit einer Längssiegelnaht und zwei Quersiegelnähten verschlossen wird.

Aus dem Stand der Technik sind sowohl vertikale, wie auch horizontale Schlauchbeutelmaschinen bekannt.

Die beiden längsseitigen Kanten oder Randbereiche einer endlosen Folie werden beim Formen der Folie zu einem Schlauch mit einer Längssiegelnaht verbunden. Die Folieninnenseiten der längsseitigen Kanten werden zusammengeführt und durch ein geeignetes Siegelverfahren zu einer sogenannten Flossennaht (engl. Finseal) verbunden. Die längsseitigen Kanten können auch überlappend, mit Innenseite und Aussenseite zusammengeführt und zu einer sogenannten Überlappungsnaht (engl. Lapseal) verbunden werden. Es sind eine Vielzahl von Siegelverfahren bekannt, zum Beispiel können Siegelschichten der Folieninnenseiten der längsseitigen Kanten durch Einwirkung von Druck und/oder Wärme und/oder Ultraschall verbunden werden. Das Problem bei der Herstellung solcher Verpackungen ist, dass die Qualität der Längssiegelnaht abhängig ist von der Positionsgenauigkeit der Überlappung der sich berührenden Folienrandbereiche. Es kann vorkommen, dass die Überlappung der Folien einseitig verschoben ist und dadurch eine qualitativ schlechte Siegelnaht entstehen kann, weil sich diese nicht über die vorgesehene Dimension erstreckt. Im schlechtesten Fall kann die Packung sogar offen bleiben, weil im Bereich der Siegelung keine Überlappung vorhanden ist. Zusätzlich ist auch ein allfällig auf der Folie aufgedrucktes Bild bei einer Verschiebung nicht mehr an der richtigen Stelle, was eine Beeinträchtigung der visuellen Qualität zur Folge haben kann.

Eine solche einseitige Verschiebung der Überlappung kann entstehen, wenn die Folie in der Vorrichtung zur Bildung des Folienschlauchs in ihrer Querposition quer zur Laufrichtung, resp. Längsrichtung gegenüber einer Sollposition verschoben ist. Die Folie wird dann mit einem Querversatz zu einem Schlauch geformt, wodurch sich die längsseitigen Kanten (Randbereiche) der Folie nicht vollständig überlappen.

Eine solche Vorrichtung ist z.B. aus WO 2006/013171 bekannt.

Die Qualität der Siegelnähte wird in der Regel stichprobenartig getestet. Falls die Siegelnähte den Qualitätsansprüchen nicht genügen, müssen oft alle seit der letzten Stichprobenkontrolle hergestellten Produkte entsorgt werden.

Bei bekannten Lösungen wird meist die Querposition der Folie noch vor dem Formen zu einem Schlauch erfasst und bei Ungenauigkeiten korrigiert. Die Messung erfolgt meist über die Folienkanten. Nachteil dieser Lösung ist, dass die Erkennung der Querposition der Folienkanten schwierig und z.T. unsicher ist. Eine mechanische Messung der Querposition ist heikel, da die Folie beschädigt werden kann. Eine Messung mit einem Sensor ist insbesondere bei transparenten Folien schwierig und unsicher.

Ein weiterer Nachteil ergibt sich weil zwischen der Messstelle und der eigentlichen Naht eine Distanz von einigen Metern liegen kann und somit eine allfällige spätere Folienverschiebung zwischen der Messung und der Siegelstelle nicht kontrolliert werden kann.

### DARSTELLUNG DER ERFINDUNG

Ausgehend von diesem Stand der Technik liegt der Erfindung die Aufgabe zugrunde, ein Verfahren anzugeben, welches die Nachteile des Standes der Technik überwindet. Insbesondere soll ein Verfahren und eine entsprechende Vorrichtung angegeben werden, welche eine einfache Erfassung einer Querposition, das heisst einer Position eines Packstoffs quer, also senkrecht, zur Längsrichtung bzw. zur Laufrichtung, entlang welcher der Packstoff in einer Verpackungsmaschine bewegt wird, erlaubt.

Eine solche Aufgabe löst ein Verfahren nach Anspruch 1. Demgemäss dient ein Verfahren zur Erfassung der Querposition von mindestens einem Siegelabschnitt an einem Packstoff, insbesondere einer Folienverpackung, und/oder der Querposition des Packstoffs selbst, wobei der Packstoff entlang einer Laufrichtung bewegt wird, wobei die Querposition die Position quer zur Laufrichtung darstellt, wobei die Querposition des mindestens einen Siegelabschnittes bzw. des Packstoffs mit mindestens einer Sensoreinheit erfasst wird. Der Packstoff umfasst mindestens eine Positionsmarke, anhand welcher die Querposition des mindestens einen Siegelabschnittes bzw. des Packstoffs quer zu Laufrichtung erfasst wird, wobei sich die Gestalt der Positionsmarke bezüglich einer Richtung, die insbesondere quer oder geneigt zur Laufrichtung verläuft, verändert, wobei diese Veränderung durch die Sensoreinheit erfasst wird, und anhand der Veränderung die Querposition des Packstoffs bzw. des mindestens einen Siegelabschnittes bestimmt wird.

Vorzugsweise wird unter Packstoff oder Folienverpackung in diesem Zusammenhang eine endlose Folie verstanden, welche einer Formeinrichtung zugeführt wird, in welcher diese Folie um ein Produkt zu einem Schlauch geformt wird. Der Begriff Packstoff wird dabei unabhängig vom eigentlichen Zustand des Packstoffs verwendet. Folglich kann mit dem erfindungsgemässen Verfahren sowohl die Position des ungeformten Packstoffs oder auch die Position des geformten Packstoffs erfasst werden.

Die Längsrichtung der Folie entspricht der Richtung ,in welcher sich die Folie erstreckt, und die Laufrichtung ist diejenige Richtung, in welcher der Packstoff resp. die Folie durch die Verpackungsmaschine läuft. Üblicherweise verlaufen Längsrichtung und Laufrichtung kollinear zueinander.

Unter Siegelabschnitt werden diejenigen Regionen nahe den parallel zur Laufrichtung des Packstoffs verlaufenden Seitenkanten des Packstoffs verstanden. Die beiden Siegelabschnitte des Packstoffs werden in nachfolgend beschriebener Weise zusammengeführt und in diesem Bereich versiegelt. Die Siegelabschnitte können so zusammengeführt werden, dass sich die jeweiligen Folieninnenseiten berühren, wobei eine sogenannte Flossennaht (engl. Finseal) gebildet wird. Optional können die Siegelabschnitte überlappend zusammengeführt werden, so dass sich die Folienaussenseite des ersten und die Folieninnenseite des zweiten Siegelabschnittes berühren. Dabei wird eine sogenannte Überlappungsnaht (engl. Lapseal) gebildet.

Unter einer Positionsmarke kann eine Marke auf dem Packstoff verstanden werden, welche beim Herstellen der Folie oder in der Verpackungsmaschine aufgedruckt werden kann. Vorzugsweise ist die Positionsmarke wiederkehrend auf dem Packstoff aufgedruckt, wobei eine Vielzahl von Positionsmarken hintereinander angeordnet sind. Alternativ kann als Positionsmarke auch eine mechanische Struktur, wie Rillen oder eine Klebeetikette, oder auch eine elektronisch erfassbare Struktur, wie eine magnetische Struktur, eingesetzt werden.

Durch die Anordnung einer derartigen Positionsmarke kann die Querposition besonders einfach und zuverlässig erfasst werden. Zudem kann je nach Ausbildung der Positionsmarke eine hohe Genauigkeit erzielt werden.

Mit anderen Worten ist die Sensoreinheit derart ausgebildet, dass die Querposition von mindestens einem der Siegelabschnitte bzw. des Packstoffs durch die Erfassung einer auf dem Packstoff angeordneten Positionsmarke erfasst wird.

Bevorzugterweise kann mit einer ersten Sensoreinheit eine am Packstoff, insbesondere am ersten Siegelbereich, angeordnete erste Positionsmarke, und mit einer weiteren Sensoreinheit eine am Packstoff, insbesondere am zweiten Siegelbereich, angeordnete zweite Positionsmarke erfasst werden.

Vorzugsweise ist die Positionsmarke derart ausgebildet, dass sich ein Abstand, welcher der Länge der Positionsmarke in Laufrichtung entspricht, mit ändernder Distanz von der Seitenkante quer zur Längsrichtung gesehen, verändert, wodurch über die Erfassung des Abstandes die Querposition des Siegelabschnittes bzw. des Packstoffs bestimmt wird.

Vorzugsweise weist die Positionsmarke mindestens eine erste erfassbare Messkante und eine zweite erfassbare Messkante auf, wobei die beiden Messkanten geneigt zueinander verlaufen, so dass sich der Abstand von der ersten Messkante zur zweiten Messkante in Laufrichtung, mit ändernder Distanz von der Seitenkante quer zur Laufrichtung gesehen, verändert, wobei durch die Erfassung des Abstandes zwischen den Messkanten die besagte Querposition des Siegelabschnittes bzw. des Packstoffes bestimmt wird. Es kann auch gesagt werden, dass sich der Abstand von der ersten Messkante zur zweiten Messkante in Laufrichtung mit ändernder Distanz von der Seitenkante quer zur Laufrichtung verändert.

Vorzugsweise verläuft mindestens eine der Messkanten geneigt bzw. winklig zur Laufrichtung des Packstoffes. Die andere Messkante steht vorzugsweise senkrecht zur Laufrichtung.

Vorzugsweise ist die Positionsmarke dieselbe Marke, welche zur Erfassung der Position längs zur Laufrichtung verwendet wird. Besonders bevorzugt wird zur Erfassung der Position längs zur Laufrichtung eine der Messkanten verwendet. Damit kann bei bedruckten Folien die Lage eines Bildes auf der Folienbahn bezüglich der Quersiegelnähten positioniert und geregelt werden.

Alternativ umfasst die Positionsmarke eine Vielzahl von unterschiedlich langen Streifen, welche bezüglich der Laufrichtung geneigt, insbesondere quer, und hintereinander angeordnet sind, wobei die Sensoreinheit je nach Querposition des Siegelabschnittes bzw. des Packstoffes eine unterschiedliche Anzahl Streifen erfasst, und so die besagte Querposition der Siegelabschnitte bestimmt.

Der Begriff "Sensor" oder "Sensoreinheit" ist so zu verstehen, dass physikalisch ein einziger Sensor verwendet werden kann oder auch mehrere Sensoren. Zum Beispiel kann zur Erfassung der Länge der Positionsmarke auch mehrere Sensoren parallel angeordnet werden. Die Querposition der Siegelabschnitte wird dann aus der Kombination der einzelnen Sensorsignale bestimmt.

Vorzugsweise werden nach Erfassung der Querposition der Siegelabschnitte über eine Positionierungseinheit die mindestens zwei Siegelabschnitte ausgerichtet, wobei durch die Positionierungseinheit die Querposition der Siegelabschnitte relativ zueinander und/oder relativ zu der mindestens einen Sensoreinheit basierend auf der Erfassung durch die Sensoreinheit eingestellt wird, und/oder wobei gegebenenfalls nach der Ausrichtung durch die Positionierungseinheit die beiden Siegelabschnitte durch eine Siegeleinheit versiegelt werden. Vorteilhaft kann nach Erfassung der Querposition der Siegelabschnitte die Querposition mit einem Sollwert verglichen und das Resultat an einen Benutzer ausgegeben werden und/oder bei Überschreiten einer zulässigen Abweichung ein oder mehrere Produkte ausgeschieden werden.

Unter einer Positionierungseinheit wird in diesem Zusammenhang eine Vorrichtung verstanden, mit welcher die Position des Packstoffs quer zu deren Laufrichtung und/oder die Position des Schlauches senkrecht zur Laufrichtung und mit Bezug auf die Siegelbereichüberlappung bildenden Maschinenteile, verändert werden kann. Die Vorrichtung kann dabei aus einer oder mehreren Einheiten bestehen. Dazu kann die gemessene Querposition des Packstoffs verwendet werden. Mit anderen Worten kann gesagt werden, dass eine Überlappung der Siegelbereiche relativ zueinander und/oder die Position der Überlappung senkrecht zur Laufrichtung korrigiert werden kann. Dies hat zur Folge, dass bei einer Flossennaht die Lage der Folienkanten relativ zueinander und die Breite der Siegelnaht eingestellt werden kann. Bei einer Überlappungsnaht verändert die Lage der Folienkanten relativ zueinander die Breite der Naht und die Verschiebung der Folie quer zur Laufrichtung verändert die Position der Naht quer zur Laufrichtung.

Mit anderen Worten kann diese erfasste Querposition für verschiedene Zwecke verwendet werden, wie das Ausscheiden fehlerhafter Produkte, als Information für den Benutzer, für Statistikzwecke, und/oder für die Steuerung allfälliger Drucker, damit das Druckbild bezüglich der Position richtig aufgedruckt wird. Weitere Verwendungszwecke sind ebenfalls denkbar.

Vorzugsweise wird mit einer weiteren Sensoreinheit die Querposition von mindestens einer Seitenkante des Packstoffs bzw. der Siegelabschnitte erfasst, wobei mit der weiteren Sensoreinheit vorzugsweise ein Signal generierbar ist, wenn eine der Seitenkanten ausserhalb eines vordefinierten Toleranzfeldes liegt, wobei das Signal der Einstellung der Querposition des Packstoffes bzw. der Siegelabschnitte dienen kann, oder wobei mit der weiteren Sensoreinheit ein Signal generiert wird, welches der effektiven Querposition der Seitenkanten entspricht, wobei das Signal der Einstellung der Querposition des Packstoffes bzw. der Siegelabschnitte dienen kann.

Eine Vorrichtung zur Durchführung eines Verfahrens nach obiger Beschreibung umfasst mindestens eine Sensoreinheit, wobei der Packstoff mindestens eine Positionsmarke umfasst, anhand welcher die Querposition des mindestens einen Siegelabschnittes bzw. der Verpackung quer zu Laufrichtung erfassbar ist, wobei sich die Gestalt der Positionsmarke in einer Richtung, die insbesondere quer oder geneigt zur Laufrichtung verläuft, verändert, wobei diese Veränderung durch die Sensoreinheit erfassbar ist, und anhand der Veränderung die Querposition des Packstoffs bzw. des mindestens einen Siegelabschnittes bestimmbar ist.

Weitere Ausführungsformen sind in den abhängigen Ansprüchen angegeben.

Die Erfindung kann sowohl bei vertikalen Schlauchbeutelmaschinen, bei welchen der Folienschlauch vertikal verläuft und in der Regel die Produkte nach dem Bilden des Schlauches eingefüllt werden, wie auch bei horizontalen Schlauchbeutelmaschinen, bei welchen der Folienschlauch horizontal verläuft und der Schlauch um die Produkte gebildet werden, verwendet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Vorrichtung zur Ausführung des erfindungsgemässen Verfahrens zur relativen Ausrichtung von zwei Siegelabschnitten einer Siegelstelle an einer Verpackung gemäss einer ersten Ausführungsform;
- Fig. 2: eine schematische Ansicht einer zu versiegelenden Folienbahn;
- Fig. 3a bis 3c: Ansichten der Figur 1, wobei sich die Siegelabschnitte an verschiedenen Positionen befindet,
- Fig. 4: eine schematische Ansicht einer Vorrichtung zur Ausführung des erfindungsgemässen Verfahrens zur relativen Ausrichtung von zwei Siegelabschnitten einer Siegelstelle an einem Packstoff gemäss einer zweiten Ausführungsform;
- Fig. 5: eine mögliche Ausführungsform einer Siegelnaht nach der Figur 4;
- Fig. 6: eine schematische Ansicht einer Vorrichtung zur Ausführung des erfindungsgemässen Verfahrens zur relativen Ausrichtung von zwei Siegelabschnitten einer Siegelstelle an einem Packstoff gemäss einer dritten Ausführungsform;
- Fig. 7: eine schematische Ansicht einer zu versiegelenden Folienbahn;
- Fig. 8: verschiedene Positionen von Positionsmarken;
- Fig. 9: eine erste Ausführungsform einer Positionsmarke; und
- Fig. 10: eine zweite Ausführungsform einer Positionsmarke.

### BESCHREIBUNG BEVORZUGTER AUSFÜHRUNGSFORMEN

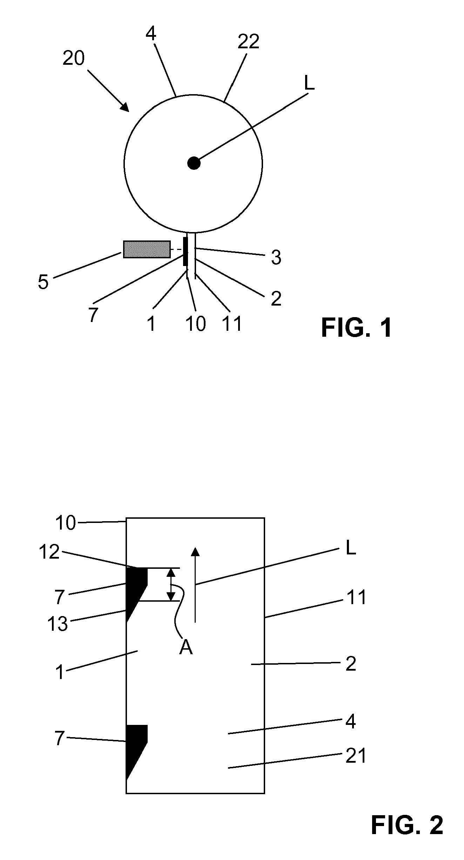

In der Figur 1 wird schematisch eine Vorrichtung zur Durchführung des erfindungsgemässen Verfahrens gezeigt.

Mit der Vorrichtung und dem Verfahren kann die Erfassung der Querposition von einem ersten Siegelabschnitt 1 mit einem zweiten Siegelabschnitt 2 eines Packstoffs 4 bereitgestellt werden. Dieses Verfahren bzw. die Vorrichtung wird vorteilhaft im Bereich einer Siegelstelle einer Verpackungsmaschine eingesetzt, wobei am Packstoff im Bereich der Siegelabschnitte 1, 2 eine Siegelstelle 3 entsteht. Die Erfassung der Querposition bildet somit die Grundlage für eine Ausrichtung der Siegelabschnitte 1, 2 zueinander.

Der Packstoff 4 ist vorzugsweise eine Folienbahn 21, aus welcher ein Schlauchbeutel 20 geformt wird. Die Folienbahn wird entlang einer Laufrichtung L, wie in der Figur 1 und 2 angedeutet, durch eine Verpackungsmaschine geführt, wobei die erfindungsgemässe Vorrichtung vorzugsweise ein Teil dieser Verpackungsmaschine darstellt und gemäss dem erfindungsgemässen Verfahren betrieben wird. Die Verpackungsmaschine kann eine Vielzahl von anderen Station umfassen, wie beispielsweise eine Siegelstation etc.. Die Folienbahn wird dabei zu einem Schlauch geformt, was in der Figur 1 schematisch dargestellt wird, und dann entlang der Laufrichtung L der Folienbahn mit einer parallel zur Laufrichtung L, welche in der Figur 1 senkrecht zur Blattebene ist, ausgebildeten Siegelnaht 3 versehen. Weiter werden dann senkrecht zur Laufrichtung L zwei nicht dargestellte Quersiegelnähte angeordnet, welche den Schlauchbeutel verschliessen.

Bei der Versiegelung ist es wichtig, dass der erste Siegelabschnitt 1 relativ zum zweiten Siegelabschnitt 2 ausgerichtet ist, so dass eine gute Siegelung entsteht. Eine solche gute Ausrichtung kann durch die Erfassung der Querposition des Packstoffs, also der Position quer bzw. senkrecht zur Laufrichtung L mit dem erfindungsgemässen Verfahren und einer entsprechenden Korrektur erzielt werden.

Die in der Figur 1 gezeigte Vorrichtung zur Erfassung der Querposition der beiden Siegelabschnitte 1, 2 umfasst im Wesentlichen eine Sensoreinheit 5 und optional eine nicht dargestellte Ausrichteinheit. Mit der Sensoreinheit 5 kann die Querposition von mindestens einem der beiden Siegelabschnitte 1, 2 erfasst werden, während über die Ausrichteinheit anhand der Informationen der Sensoreinheit 5, die beiden Siegelabschnitte 1, 2 zueinander ausgerichtet werden können, so dass sich diese entsprechend überlappen und die Siegelstelle 3 herstellbar ist.

Mit der mindestens einen Sensoreinheit 5 wird also die Querposition von mindestens einem der Siegelabschnitte 1, 2 bzw. des Packstoffs 4 selbst erfasst. In der vorliegenden Ausführungsform wird die Querposition des ersten Siegelabschnittes 1 erfasst. Über eine optionale Positionierungseinheit wird dann die Position der Siegelabschnitte relativ zur Längsrichtung L oder aber zueinander ausgerichtet, wobei dies basierend auf der Erfassung durch die Sensoreinheit 5 erfolgt. Die Sensoreinheit 5 ist dabei derart ausgebildet, dass diese die Querposition bzw. die Querposition von einem der zwei Siegelabschnitte 1, 2 durch die Erfassung einer auf dem Packstoff 4 angeordneten Positionsmarke 7 erfasst. Folglich wird also die Querposition des Siegelabschnittes 1 anhand der Positionsmarke 7, die auch als Referenzdruck bezeichnet werden kann, durch die Abtastung der Positionsmarke 7 erfasst. Mit Bezug zur Figur 1 heisst dies, dass die Querposition der Folienkante 10 des ersten Siegelabschnittes 1 über die Positionsmarke 7, welche ebenfalls im ersten Siegelabschnitt 1 liegt, bestimmbar ist.

Es können für die Erfassung der Positionsmarke 7 auch mehrere Sensoreinheiten hintereinander angeordnet werden.

Über die Erfassung der Querposition der Positionsmarke 7, welche ortsfest am Packstoff 4 bzw. auf der Folienbahn 21 angeordnet ist, bzw. aufgedruckt ist, kann die effektive Position, also die Ist-Position, des ersten Siegelabschnittes 1 bzw. der ersten Kante 10 erfasst werden. Somit kann aufgrund dieser Erfassung die Ist-Querposition der ersten Kante 10 auf die Soll-Querposition korrigiert werden. Eine bevorzugte Soll-Querposition wird dabei in der Figur 1 gezeigt, wobei hier beide Siegelabschnitte 1, 2 exakt übereinander liegen. Eine solche Soll-Querposition wird beispielsweise bei der Herstellung einer sogenannten Flossennaht (Fin-Seal) gewünscht.

Weiter ist es für die Qualität der Siegelung auch wichtig, dass die beiden Siegelabschnitte 1, 2 nicht nur exakt übereinander liegen, sondern auch genau in Längsrichtung durch die Siegelstation, welche bezüglich der Bewegung in Längsrichtung nach der Sensoreinheit 5 angeordnet ist, geführt wird. Die Sensoreinheit 5 und die Positionsmarken sind vorzugsweise zusätzlich derart ausgebildet, dass die Querposition der Siegelabschnitte 1, 2 bezüglich der Sensoreinheit 5 erfasst werden kann. Somit stellt die Sensoreinheit 5 Daten bereit, dass die Längssiegelnaht im Wesentlichen genau an der gewünschten Stelle angeordnet werden kann, womit eine gute Siegelnaht bereitstellbar ist. Dies hat zusätzlich noch den Vorteil, dass die Siegelnaht auch visuell gut aussieht und kein unbedruckter Teil der Innenseite einer Seitenkante 10, 11 sichtbar ist.

Zusammenfassend kann mit der Sensoreinheit 5 also die Querposition der Positionsmarken 7 erfasst werden, womit bestimmbar wird, wie die beiden Siegelabschnitte 1, 2 zueinander stehen und/oder womit erfassbar wird, wie die Siegelabschnitte 1, 2 zur Laufrichtung L bzw. zur Siegelvorrichtung stehen. Je nach Anordnung der Sensoreinheit kann die Querposition der Folie vor der Schlauchbildung, vor der Bildung der Siegelnaht und/oder die Querposition der einzelnen Seitenkanten 10, 11 quer zur Laufrichtung der Folie erfasst bzw. gemessen werden.

Die Positionsmarke 7 weist eine Gestalt auf, welche sich bezüglich einer Richtung, die insbesondere quer oder geneigt zur Laufrichtung L verläuft, verändert, wobei diese Veränderung durch die Sensoreinheit 5 erfasst wird, und anhand der Veränderung die Querposition des Packstoffs 4 bzw. des mindestens einen Siegelabschnittes 1, 2 bestimmt wird. Die Positionsmarke 7 ist vorzugweise derart ausgebildet, dass ein Abstand A der Positionsmarke in Laufrichtung mit ändernder Distanz von der Seitenkante 10, 11 quer zur Laufrichtung gesehen verändert, wodurch über die Erfassung des Abstandes A die Querposition des Siegelabschnittes 1, 2 bzw. des Packstoffes 4 bestimmt wird. Eine solche Ausführungsform wird beispielsweise in den Figuren 2, 8 und 9 gezeigt.

Die Positionsmarke 7 kann verschiedenartig ausgebildet sein. Beispielsweise kann die Positionsmarke 7 die Gestalt eines Aufdruckes auf der Oberfläche 22 der Folienbahn 21 aufweisen. Der Aufdruck kann dabei eine übliche Bedruckung, wie ein Logo, sein. Somit handelt es sich bei diesem Aufdruck um einen Bestandteil der letztendlich resultierenden Verpackung. Die Querposition der Bedruckung wird durch Ausmessen eines definierten Bereichs der Bedruckung erfasst. Auch kann die Positionsmarke die Gestalt eines farbcodierten, helligkeitscodierten, oder punktcodierten Musters, einer magnetischen Struktur, einer mechanischen Struktur, eines Aufdruckes oder einer Klebeetikette aufweisen.

Bevorzugt ist auch die Anordnung einer Positionsmarke 7 im Bereich des ersten Siegelabschnittes 1, 2, so wie dies in den Figuren 1 und 2 gezeigt wird. Die Form der Positionsmarke ist dabei bevorzugt so ausgebildet, dass der Messwert des Sensors einem Mass der Folienposition quer zur Laufrichtung L entspricht. Hierfür ist die Positionsmarke 7 derart ausgebildet, dass sich ein Abstand A, welcher der Länge der Positionsmarke in Laufrichtung L entspricht, mit zunehmender Distanz von der Seitenkante 10, 11 quer zur Längsrichtung L gesehen, verändert. Durch die Erfassung des Abstandes A kann die Querposition des Siegelabschnittes 1, 2 zur Laufrichtung L bestimmt werden.

Die Positionsmarke 7 kann auch noch andere Funktionen haben, wie beispielsweise diejenige einer Zentriermarke zur Positionierung eines allfälligen Druckbildes auf der Verpackung bzw. dem Packstoff relativ zum zu verpackenden Produkt resp. relativ zu den Quersiegelnähten. Ebenfalls kann die Positionsmarke ein Teil des Druckbildes sein.

Vorzugsweise weist die Positionsmarke 7 mindestens eine erste erfassbare Messkante 12 und eine zweite erfassbare Messkante 13 auf, welche geneigt zueinander verlaufen. Mindestens eine der beiden Messkanten 12, 13 verläuft dabei geneigt bzw. winklig zur Laufrichtung L des Packstoffes 4 verläuft, so dass der Abstand von der ersten Messkante 12 zur zweiten Messkante 13 in paralleler Richtung zur Seitenkante des Siegelabschnittes 1, 2 variiert, wobei durch die Erfassung des Abstandes A zwischen den Messkanten 12, 13, die Querposition des Siegelabschnittes 1, 2 quer zur Laufrichtung L bestimmt werden kann. Folglich ergibt eine Positionsverschiebung des Siegelabschnittes 1, 2 quer zur Laufrichtung bei der Messung des Abstandes A einen unterschiedlichen Messwert.

In der vorliegenden Ausführungsform haben die Positionsmarken 7 die Gestalt eines rechtwinkligen Trapezes. In dieser Ausführung kann zusätzlich zum Beispiel die erste Messkante 12, welche senkrecht zur Laufrichtung der Folie verläuft, als Messkante zur Erfassung der Position der Folie längs zur Laufrichtung verwendet werden. Andere Arten eines Trapezes sind auch denkbar. Alternativ können auch andere geometrische Formen eingesetzt werden. Beispielsweise ein Dreieck oder gar gekurvte Konturen.

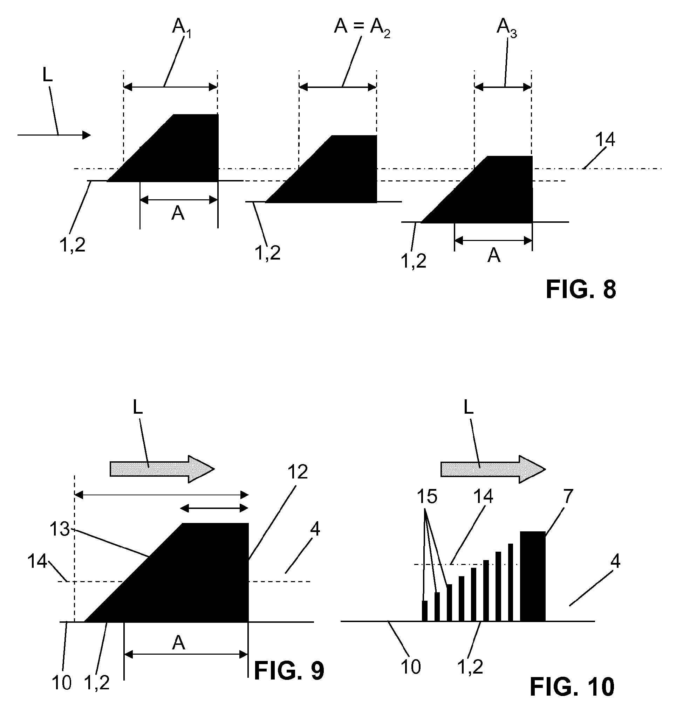

Weitere Alternativen der Positionsmarke 7 werden in den Figuren 8, 9 und 10 gezeigt. Diese Positionsmarken 7 sind in allen hierin beschrieben Ausführungsformen gleichermassen einsetzbar.

In der Figur 8 wird die Messung des Abstandes A verdeutlicht. Die strichpunktierte Linie stellt die Tastlinie 14 des Sensors dar, welche parallel zur Laufrichtung der Folienbahn verläuft.

Bei der Abbildung links wird ein Abstand A1, welcher der Ist-Wert darstellt, gemessen. Der Soll-Wert ist jedoch der Abstand A. Folglich liegt hier eine Verschiebung des Siegelabschnittes 1, 2 bzw. des ganzen Packstoffs 4 quer zur Laufrichtung L vor. Die Querposition des Siegelabschnittes 1, 2 muss also korrigiert werden.

Bei der mittleren Abbildung entspricht der Abstand A2 dem Abstand A. Der Ist-Wert A2 ist also gleich dem Soll-Wert A und die Querposition des Siegelabschnittes 1, 2 ist korrekt.

Bei der Abbildung rechts wird ein Abstand A3, welcher der Ist-Wert darstellt, gemessen. Der Soll-Wert ist jedoch der Abstand A. Folglich liegt hier eine Verschiebung des Siegelabschnittes 1, 2 bzw. des ganzen Packstoffs 4 quer zur Laufrichtung L vor. Die Querposition des Siegelabschnittes 1, 2 muss also korrigiert werden.

Mit Hilfe der Figur 9 wird nun die bevorzugte Form der Positionsmarke 7 in der Gestalt des Trapezes erläutert. Das Trapez weist eine erste Messkante 12 und eine zweite Messkante 13 auf. Die erste Messkante 12 steht im Wesentlichen senkrecht zur Laufrichtung L des Packstoffs 4, während die zweite Messkante 13 geneigt zur Laufrichtung L steht. Der Abstand A wird auf der Höhe der Tastlinie 14 gemessen.

Anhand der Figur 10 wird eine weitere alternative Ausführungsform der Positionsmarke 7 gezeigt. Hier umfasst die Positionsmarken eine Vielzahl von unterschiedlich langen Streifen 15 hintereinander in Laufrichtung. Dabei werden mit der Sensoreinheit je nach Querposition der Folie eine unterschiedliche Anzahl Striche gemessen, was wiederum einem Mass der Querposition der Folie entspricht.

Die Positionsmarke 7 kann an einem beliebigen Ort auf dem Packstoff 4 angeordnet sein. Bevorzugt wird jedoch eine Anordnung in einem Randbereich, also nahe der Seitenkante 10 oder 11, des Packstoffs 4 bzw. Folienbahn 21, so wie dies in der Figur 2 gezeigt wird. Der Randbereich ist üblicherweise auch gleich der Siegelabschnitt 1, 2. Es kann also gesagt werden, dass die Positionsmarke 7 vorzugsweise im Siegelabschnitt 1, 2 angeordnet ist.

Die Sensoreinheit 5 kann in einer Verpackungsmaschine an verschiedenen Orten platziert sein. Im Falle einer Folienbahn ist es beispielsweise denkbar, die Sensoreinheit 5 bezüglich der Laufrichtung L gesehen vor der Schlauchformungsvorrichtung anzuordnen, so dass die Querposition der Folienbahn selbst zur Längsrichtung L erfasst wird. Weiter kann die Sensoreinheit 5 auch zwischen der Schlauchformungsvorrichtung und einer Siegelstation angeordnet sein, so dass die Querposition der Siegelabschnitte 1, 2 erfasst wird.

Besonders bevorzugt wird die Sensoreinheit 5 aber im Bereich einer Siegeleinheit angeordnet, was den Vorteil hat, dass die Positionsabweichung an der Stelle gemessen wird, wo die Siegelabschnitte 1, 2 exakt ausgerichtet sein sollen.

Die Sensoreinheit 5 gibt vorzugsweise ein Signal aus, welches der Abweichung des Packstoffs bzw. der Folienbahn der Längsrichtung L entspricht. Dieses Signal kann dann einer Positionierungseinheit bzw. einer Foliensteuerungseinrichtung zugeführt werden, wobei der Packstoff 4 selbst oder zwei Siegelabschnitte 1, 2 zueinander ausgerichtet werden. Es kann also gesagt werden, dass der Packstoff 4 oder die Siegelabschnitte 1, 2 relativ zueinander basierend auf der Erfassung durch die Sensoreinheit 5 ausgerichtet werden. Alternativ oder zusätzlich kann dieses Signal für die Beurteilung der Qualität der Längssiegelnaht mit entsprechender Informationsausgabe verwendet werden. Weitere Anwendungen, wie zur Ausrichtung eines Druckbildes, welches durch einen Drucker direkt in der Verpackungsmaschine aufgetragen wird, sind ebenfalls denkbar.

Die Sensoreinheit kann ein analoger Sensor sein, der ein analoges Signal ausgibt, wie beispielsweise ein Signal, welches der effektiven Lage entspricht. Alternativ kann auch ein digitaler Sensor angeordnet sein, welcher ein digitales Signal ausgibt, mit welchem festgestellt wird, ob die Marke in einem entsprechenden Bereich liegt oder nicht. Zum Beispiel "1" wenn die Marke erfasst wird, oder "0" wenn die Marke nicht erfasst wird.

Bezüglich der in den Figuren 1 und 2 gezeigten Ausführungsform kann zusammenfassend festgehalten werden, dass mit einer Sensoreinheit 5 und einer auf dem Packstoff 4 bzw. der Folienbahn aufgedruckten Positionsmarke 7 die Querposition des Packstoffs 4 bzw. der Folienbahn quer zur Laufrichtung L erfasst werden kann. Die Erfassung kann dabei sowohl im geformten Zustand wenn beide Siegelabschnitte 1, 2 direkt gegenüberliegend angeordnet sind, wie dieser in der Figur 1 gezeigt wird, oder aber im noch nicht geformten Zustand, wie in der Figur 2 gezeigt, erfolgen.

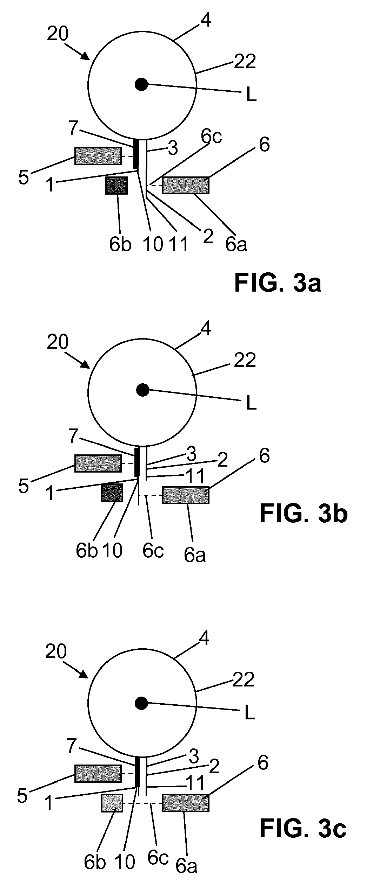

In den Figuren 3a bis 3c wird eine weitere Ausführungsform der vorliegenden Erfindung gezeigt. Der Packstoff 4 umfasst hier ebenfalls zwei Siegelabschnitte 1, 2 und mindestens eine Positionsmarke 7. Durch eine erste Sensoreinheit 5 wird die Querposition der Positionsmarke 7 gemäss der obigen Beschreibung erfasst. Weiter umfasst die Ausführungsform hier noch eine weitere Sensoreinheit 6, mit welcher die Querposition von mindestens einer Seitenkante 10, 11 des Packstoffs 4 bzw. des Sigelabschnittes 1, 2 erfasst wird. Mit der weiteren Sensoreinheit 6 ist vorzugsweise ein Signal generierbar, wenn eine der Seitenkanten 10, 11 ausserhalb eines vordefinierten Toleranzfeldes liegt, wobei das Signal der Einstellung der Querposition des Packstoffs 4 bzw. der Siegelabschnitte 1, 2 dient. Somit kann der Ist-Wert einem Soll-Wert angeglichen werden.

Die weitere Sensoreinheit 6 kann beispielsweise eine Lichtschranke mit Sender 6a, welcher einen Lichtstrahl 6c aussendet, und Empfänger 6b, der den Lichtstrahl 6c empfängt, sein. In der Figur 3a liegt der zweite Siegelabschnitt 2 zwischen Sender 6a und Empfänger 6b. Folglich erreicht der Lichtstrahl 6c vom Sender 6a nicht den Empfänger 6b und das oben genannte Signal wird generiert. In der Figur 3b liegt der erste Siegelabschnitt 1 zwischen Sender 6a und Empfänger 6b, was den gleichen Effekt hat. In der Figur 3c liegen die beiden Siegelabschnitte 1 und 2 übereinander, womit der Lichtstrahl 6c vom Sender 6a zum Empfänger 6b gelangen kann und das oben genannte Signal wird nicht mehr generiert. In dieser Ausführungsform ist das Signal ein binärer Wert.

Zusammenfassend kann zur Ausführungsform mit dem weiteren Sensor 6 gesagt werden, dass nicht nur die Querposition des Packstoffs 4 bzw. des ersten Siegelabschnittes 1 bzw. des zweiten Siegelabschnittes 2 bezüglich der Längsrichtung L erfasst wird, sondern auch die relative Querposition der Siegelabschnitte 1, 2 zueinander bzw. zur Siegeleinheit.

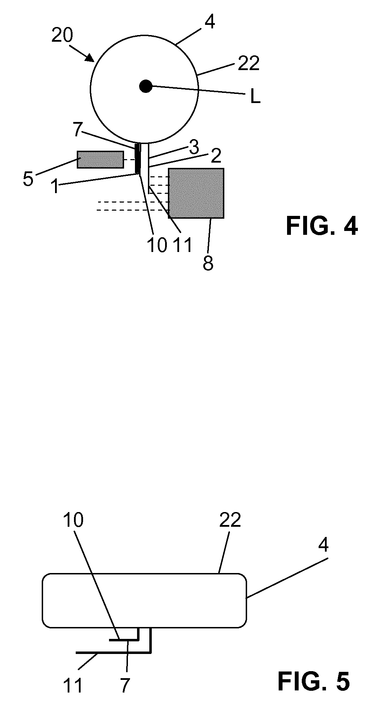

In der Figur 4 wird eine weitere Ausführungsform gezeigt. Der Packstoff 4 umfasst hier ebenfalls zwei Siegelabschnitte 1, 2 und mindestens eine Positionsmarke 7. Durch eine erste Sensoreinheit 5 wird die Querposition der Positionsmarke 7 gemäss der obigen Beschreibung erfasst. Weiter umfasst die Ausführungsform hier noch eine weitere Sensoreinheit 8, mit welcher die Querposition von mindestens einer Seitenkante 10, 11 des Packstoffes 4 bzw. des Siegelabschnittes 1, 2 erfasst wird. Mit der weiteren Sensoreinheit 8 kann die effektive Querposition der entsprechenden Seitenkanten 10, 11 erfasst werden. Das mit der Sensoreinheit 8 generierte Signal entspricht somit einem Mass der effektiven Querposition der Seitenkanten 10, 11, wobei das Signal der Einstellung der Querposition des Packstoffs 4 bzw. der Siegelabschnitte 1, 2 dient. Der Sensor erzeugt in diesem Fall ein analoges Signal.

Die Ausführungsform nach der Figur 4 hat den Vorteil, dass die Querposition beider Seitenkanten 10, 11 bzw. beider Siegelbereiche 1, 2 sehr flexibel einstellbar ist. Damit kann erreicht werden, dass die beiden Seitenkanten genau übereinanderliegen und die gesamte Siegelnaht bezüglich der Richtung quer zur Laufrichtung L in einem Sollbereich zu liegen kommt.

Die Querposition der Seitenkanten 10, 11 kann aber auch so gesteuert werden, dass die Folienkante ohne die Positionsmarke die Kante mit der Positionsmarke überlappt. Damit kann erreicht werden, dass nach dem Umlegen der Naht an das Produkt nur noch der Folienkantenbereich ohne Marke sichtbar ist und allfällige ungenaue und damit auch unschöne Überlappungen verdeckt werden können. Dies wird beispielsweise anhand des Packstoffs in der Figur 5 gezeigt, bei welcher die erste Seitenkante 10 nicht direkt über der zweiten Seitenkante 11 liegt.

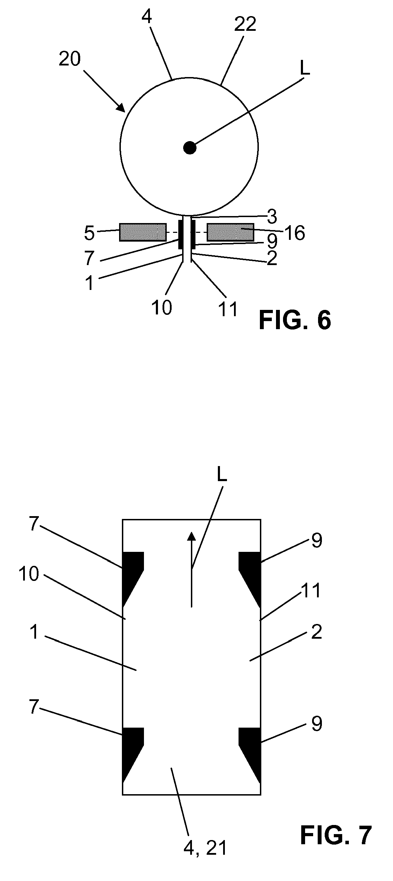

In der Figur 6 und der Figur 7 wird eine weitere Ausführungsform gezeigt. Der Packstoff 4 umfasst hier ebenfalls zwei Siegelabschnitte 1, 2 und mindestens eine Positionsmarke 7. Durch eine erste Sensoreinheit 5 wird die Querposition der Positionsmarke 7 gemäss der obigen Beschreibung erfasst. Weiter umfasst die Ausführungsform hier eine weitere Sensoreinheit 16, mit welcher die Querposition einer zweiten Positionsmarke 9 erfasst wird. Die weitere Sensoreinheit 16 weist dabei die gleichen Merkmale auf, wie die erste Sensoreinheit 5 und die zweite Positionsmarke 9 weist die gleichen Merkmale auf, wie die oben beschriebenen Positionsmarken 7. Durch die Erfassung der beiden Positionsmarken 7, 9 können die beiden Siegelabschnitte 1, 2 zueinander ausgerichtet werden.

Vorzugsweise ist die erste Positionsmarke 7 im Bereich des ersten Siegelabschnittes 1 und die zweite Positionsmarke 9 im Bereich des zweiten Siegelabschnittes 2 angeordnet.

Weil beide Randbereiche der Folie nahe der jeweiligen Kante mit einer Positionsmarke 7, 9 versehen sind und diese beidseitig der Siegelnaht durch je eine Sensoreinheit 5, 16 vermessen werden, kann eine einfache und kostengünstige Lösung bereitgestellt werden.

Bezüglich den Ausführungsformen in den Figuren 3, 4, 6 und 7 kann somit gesagt werden, dass eine Verschiebung der gesamten Naht in beiden Richtungen quer zur Laufrichtung der Folie erkannt und bei Bedarf gemeldet und/oder korrigiert werden.

Die oben beschriebenen Ausführungsformen weisen folgende Vorteile auf:
- Die Querposition der Siegelabschnitte können direkt bei der Siegeleinheit zur Herstellung der Längsnaht gemessen werden, was den Vorteil hat, dass in der Messkette weniger Fehler zwischen Messstelle und Siegeleinheit auftreten.
- Die Erfassung der Querposition kann sehr einfach und mit kostengünstigen Sensoren, welche die Folie nicht beschädigen realisiert werden.
- Es können je nach Qualitätsansprüchen unterschiedliche Varianten mit unterschiedlicher Anzahl Sensoren und Verstellmöglichkeiten eingesetzt werden.
- Der Ausschuss an Produkten kann massiv reduziert werden, da eine Abweichung der Sollqualität sofort erkannt werden und entsprechend reagiert werden kann.

## Patentansprüche

1. Verfahren zur Erfassung der Querposition von mindestens einem Siegelabschnitt (1, 2) an einem Packstoff (4), insbesondere einer Folienverpackung, und/oder der Querposition des Packstoffs (4) selbst, wobei der Packstoff (4) entlang einer Laufrichtung (L) bewegt wird, wobei die Querposition die Position quer zur Laufrichtung (L) darstellt, wobei die Querposition des mindestens einen Siegelabschnittes (1, 2) bzw. des Packstoffs (4) mit mindestens einer Sensoreinheit (5) erfasst wird,
**dadurch gekennzeichnet, dass**
der Packstoff (4) mindestens eine Positionsmarke (7) umfasst, anhand welcher die Querposition des mindestens einen Siegelabschnittes (1, 2) bzw. des Packstoffs (4) erfasst wird, wobei sich die Gestalt der Positionsmarke (7) bezüglich einer Richtung, die quer oder geneigt zur Laufrichtung (L) verläuft, verändert, wobei diese Veränderung durch die Sensoreinheit (5) erfasst wird, und anhand der Veränderung die Querposition des Packstoffs (4) bzw. des mindestens einen Siegelabschnittes (1, 2) bestimmt wird.

2. Verfahren nach Anspruch 1, **dadurch gekennzeichnet, dass** mit einer ersten Sensoreinheit (5) eine am Packstoff (4), insbesondere am ersten Siegelbereich (1), angeordnete erste Positionsmarke (7), und mit einer weiteren Sensoreinheit (16) eine am Packstoff (4), insbesondere am zweiten Siegelbereich (2), angeordnete zweite Positionsmarke (9) erfasst werden.

3. Verfahren nach einem der vorhergehenden Ansprüche, **dadurch gekennzeichnet, dass** die Positionsmarke (7) derart ausgebildet ist, dass sich ein Abstand (A), welcher der Länge der Positionsmarke in Laufrichtung (L) entspricht, mit ändernder Distanz von der Seitenkante (10, 11) quer zur Laufrichtung (L) gesehen, verändert, wodurch über die Erfassung des Abstandes (A) die Querposition des Siegelabschnittes (1, 2) bzw. des Packstoffs (4) bestimmt wird.

4. Verfahren nach einem der vorhergehenden Ansprüche, **dadurch gekennzeichnet, dass** die Positionsmarke (7, 9) mindestens eine erste erfassbare Messkante (12) und eine zweite erfassbare Messkante (13) aufweist, wobei die beiden Kanten (10, 11) geneigt zueinander verlaufen, so dass sich der Abstand (A) von der ersten Messkante (12) zur zweiten Messkante (13) in Laufrichtung (L), mit ändernder Distanz von der Seitenkante (10, 11) quer zur Laufrichtung (L) gesehen, verändert, wobei durch die Erfassung des Abstandes (A) zwischen den Messkanten (12, 13) die besagte Querposition des Siegelabschnittes (1, 2) bzw. des Packstoffs (4) bestimmt wird.

5. Verfahren nach Anspruch 4, **dadurch gekennzeichnet, dass** mindestens eine der Messkanten (13) geneigt bzw. winklig zur Laufrichtung (L) des Packstoffs (4) verläuft.

6. Verfahren nach Anspruch 1 oder 2, **dadurch gekennzeichnet, dass** die Positionsmarke (7) eine Vielzahl von unterschiedlich langen Streifen (15) umfasst, welche bezüglich der Laufrichtung (L) geneigt, insbesondere quer, und hintereinander angeordnet sind, wobei die Sensoreinheit je nach Querposition des Siegelabschnittes (1, 2) bzw. des Packstoffs (4) eine unterschiedliche Anzahl Streifen (15) erfasst und so die besagte Querposition der Siegelabschnitte (1, 2) bestimmt.

7. Verfahren nach einem der vorhergehenden Ansprüche, **dadurch gekennzeichnet, dass** nach Erfassung der Querposition der Siegelabschnitte (1, 2) über eine Positionierungseinheit die mindestens zwei Siegelabschnitte (1, 2) ausgerichtet werden, und dass durch die Positionierungseinheit die Querposition der Siegelabschnitte (1, 2) relativ zueinander und/oder relativ zu der mindestens einen Sensoreinheit basierend auf der Erfassung durch die Sensoreinheit (5) eingestellt wird, und/oder dass gegebenenfalls nach der Ausrichtung durch die Positionierungseinheit die beiden Siegelabschnitte (1, 2) durch eine Siegeleinheit versiegelt werden.

8. Verfahren nach einem der vorhergehenden Ansprüche, **dadurch gekennzeichnet, dass** mit einer weiteren Sensoreinheit (6) die Querposition von mindestens einer Seitenkante (10, 11) des Packstoffs (4) bzw. der Siegelabschnitte (1, 2) erfasst wird,
wobei mit der weiteren Sensoreinheit (6) vorzugsweise ein Signal generierbar ist, wenn eine der Seitenkanten (10, 11) ausserhalb eines vordefinierten Toleranzfeldes liegt, wobei das Signal der Einstellung der Querposition des Packstoffs (4) bzw. der Siegelabschnitte (1, 2) dienen kann, oder
wobei mit der weiteren Sensoreinheit (8) ein Signal generiert wird, welches der effektiven Querposition der Seitenkanten (10, 11) entspricht, wobei das Signal der Einstellung der Querposition des Packstoffs (4) bzw. der Siegelabschnitte (1, 2) dienen kann.

9. Vorrichtung zur Durchführung eines Verfahrens nach den Ansprüchen 1 bis 8, wobei die Vorrichtung mindestens eine Sensoreinheit (5) umfasst, **dadurch gekennzeichnet, dass** der Packstoff (4) mindestens eine Positionsmarke (7) umfasst, anhand welcher die Querposition des mindestens einen Siegelabschnittes (1, 2) bzw. des Packstoffs zur Laufrichtung (L) erfassbar ist, wobei sich die Gestalt der Positionsmarke in einer Richtung, die quer oder geneigt zur Laufrichtung (L) verläuft, verändert, wobei diese Veränderung durch die Sensoreinheit (5) erfassbar ist, und anhand der Veränderung die Querposition des Packstoffs (4) bzw. des mindestens einen Siegelabschnittes (1, 2) bestimmbar ist.

10. Vorrichtung nach Anspruch 9, **dadurch gekennzeichnet, dass** die Vorrichtung zwei Sensoreinheiten (5, 16) zur Erfassung von einer am ersten Siegelbereich (1) angeordneten Positionsmarke (7) und einer weiteren am zweiten Siegelbereich (2) angeordnete Positionsmarke (9) umfasst.

11. Vorrichtung nach Anspruch 9 oder 10, **dadurch gekennzeichnet, dass** die Positionsmarke (7) derart ausgebildet ist, dass sich ein Abstand (A), welcher der Länge der Positionsmarke in Laufrichtung (L) entspricht, mit ändernder Distanz von der Seitenkante (10, 11) quer zur Laufrichtung (L) gesehen, verändert, wodurch über die Erfassung des Abstandes (A) die Querposition des Siegelabschnittes (1, 2) bzw. des Packstoffs (4) bestimmbar wird.

12. Vorrichtung nach einem der Ansprüche 9 bis 11, **dadurch gekennzeichnet, dass** die Positionsmarke (7, 9) mindestens eine erste erfassbare Messkante (12) und eine zweite erfassbare Messkante (13) aufweist, wobei die beiden Kanten (10, 11) geneigt zueinander verlaufen, so dass sich der Abstand (A) von der ersten Messkante (12) zur zweiten Messkante (13) in Laufrichtung (L), mit ändernder Distanz von der Seitenkante (10, 11) quer zur Laufrichtung (L) gesehen, verändert, wobei durch die Erfassung des Abstandes (A) zwischen den Messkanten (12, 13) die besagte Querposition des Siegelabschnittes (1, 2) bzw. des Packstoffs (4) bestimmbar wird.

13. Vorrichtung nach einem der vorhergehenden Ansprüche, **dadurch gekennzeichnet, dass** die Vorrichtung weiter eine Siegelstation umfasst, welche bezüglich der Bewegungsrichtung der Folie von der Faltvorrichtung gesehen stromabwärts angeordnet ist, wobei die Sensoreinheit(en) bevorzugt kurz vor, insbesondere unmittelbar vor, der Siegelstation angeordnet sind.

14. Vorrichtung nach einem der vorhergehenden Ansprüche, **dadurch gekennzeichnet, dass** die Vorrichtung mindestens eine weitere Sensoreinheit (6, 8) umfasst, mit welcher die Querposition von mindestens einer Seitenkante (10, 11) der Siegelabschnitte (1, 2) erfassbar ist,
wobei mit der weiteren Sensoreinheit (6, 8) ein Fehlersignal generierbar ist, wenn die mindestens eine Seitenkante (10, 11) ausserhalb eines Toleranzfeldes liegt und die Seitenkante (10, 11) durch die Positionierungseinheit in das Toleranzfeld bewegbar ist oder ein Fehlersignal ausgebbar ist, und/oder
wobei mit der weiteren Sensoreinheit (6, 8) die Querposition der mindestens einen Seitenkante (10, 11) erfassbar ist und entsprechend eines vordefinierten Soll-Wertes korrigierbar ist.

15. Packstoff, insbesondere Folienbahn, zur Verwendung in einem Verfahren und/oder einer Vorrichtung nach einem der vorhergehenden Ansprüche, **dadurch gekennzeichnet, dass** der Packstoff (4) mindestens eine Positionsmarke (7) umfasst, anhand welcher die Querposition des mindestens einen Siegelabschnittes (1, 2) bzw. des Packstoffs quer zu Laufrichtung (L) erfasst wird, wobei sich die Gestalt der Positionsmarke mit zunehmenden Abstand in einer Richtung, die quer oder geneigt zur Laufrichtung (L) verläuft, verändert, wobei diese Veränderung durch die Sensoreinheit (5) erfasst wird, und anhand der Veränderung die Querposition des Packstoffs (4) bzw. des mindestens einen Siegelabschnittes (1, 2) bestimmt wird.

## Claims

1. Method for detecting the transverse position of at least one sealing section (1, 2) on a packaging material (4), in particular a film package, and/or the transverse position of the packaging material (4) itself, where the packaging material (4) is displaced along a running direction (L), where the transverse position represents the position transversely with respect to the running direction (L), where the transverse position of the at least one sealing section (1, 2) or of the packaging material (4) is detected by means of at least one sensor unit (5),
**characterized in that**
the packaging material (4) comprises at least one position mark (7), by using which the transverse position of the at least one sealing section (1, 2) or of the packaging material (4) is detected, wherein the shape of the position mark (7) changes with respect to a direction which runs transversely or at an angle to the running direction (L), wherein said change is detected by the sensor unit (5) and the transverse position of the packaging material (4) or of the at least one sealing section (1, 2) is determined by using the change.

2. Method according to Claim 1, **characterized in that** by using a first sensor unit (5), a first position mark (7) arranged on the packaging material (4), in particular on the first sealing region (1), is detected, and by using a further sensor unit (16), a second position mark (9) arranged on the packaging material (4), in particular on the second sealing region (2), is detected.

3. Method according to one of the preceding claims, **characterized in that** the position mark (7) is formed in such a way that a distance (A) which -corresponds to the length of the position mark in the running direction (L) changes as the distance from the side edge (10, 11) changes, viewed transversely with respect to the running direction (L), by which means, via the detection of the distance (A), the transverse position of the sealing section (1, 2) or of the packaging material (4) is determined.

4. Method according to one of the preceding claims, **characterized in that** the position mark (7, 9) has at least one first detectable measuring edge (12) and a second detectable measuring edge (13), wherein the two edges (10, 11) run at an angle to each other, so that the distance (A) from the first measuring edge (12) to the second measuring edge (13) in the running direction (L) changes as the distance from the side edge (10, 11) changes, viewed transversely with respect to the running direction (L), wherein, by means of the detection of the distance (A) between the measuring edges (12, 13), said transverse position of the sealing section (1, 2) or of the packaging material (4) is determined.

5. Method according to Claim 4, **characterized in that** at least one of the measuring edges (13) runs inclined or at an angle with respect to the running direction (L) of the packaging material (4).

6. Method according to Claim 1 or 2, **characterized in that** the position mark (7) comprises a multiplicity of stripes (15) of different lengths which, with respect to the running direction (L), are arranged inclined, in particular transversely, and one after another, wherein the sensor unit detects a different number of stripes (15) depending on the transverse position of the sealing section (1, 2) or of the packaging material (4), and thus determines said transverse position of the sealing sections (1, 2).

7. Method according to one of the preceding claims, **characterized in that** after the detection of the transverse position of the sealing sections (1, 2), the at least two sealing sections (1, 2) are aligned via a positioning unit, and **in that**, by means of the positioning unit, the transverse position of the sealing sections (1, 2) with respect to one another and/or with respect to the at least one sensor unit is adjusted on the basis of the detection by the sensor unit (5), and/or **in that**, if appropriate, after the alignment by the positioning unit, the two sealing sections (1, 2) are sealed by a sealing unit.

8. Method according to one of the receding claims, **characterized in that** by using a further sensor unit (6), the transverse position of at least one side edge (10, 11) of the packaging material (4) or of the sealing sections (1, 2) is detected,
wherein, by using the further sensor unit (6), it is preferably possible to generate a signal when one of the side edges (10, 11) lies outside a predefined tolerance area,
wherein the signal can be used to adjust the transverse position of the packaging material (4) or of the sealing sections (1, 2), or
wherein, by using the further sensor unit (8), a signal is generated which corresponds to the effective transverse position of the side edges (10, 11), wherein the signal can be used to adjust the transverse position of the packaging material (4) or of the sealing sections (1, 2).

9. Device for carrying out a method according to Claims 1 to 8, where the device comprises at least one sensor unit (5), **characterized in that** the packaging material (4) comprises at least one position mark (7), by using which the transverse position of the at least one sealing section (1, 2) or of the packaging material with respect to the running direction (L) can be detected, wherein the shape of the position mark changes in a direction which runs transversely or at an angle to the running direction (L), wherein this change can be detected by the sensor unit (5) and, by using the change, the transverse position of the packaging material (4) or of the at least one sealing section (1, 2) can be determined.

10. Device according to Claim 9, **characterized in that** the device comprises two sensor units (5, 16) for detecting a position mark (7) arranged on the first sealing region (1) and a further position mark (9) arranged on the second sealing region (2).

11. Device according to Claim 9 or 10, **characterized in that** the position mark (7) is formed in such a way that a distance (A) which corresponds to the length of the position mark in the running direction (L) changes as the distance from the side edge (10, 11) changes, viewed transversely with respect to the running direction (L), by which means, via the detection of the distance (A), it becomes possible to determine the transverse position of the sealing section (1, 2) or of the packaging material (4).

12. Device according to one of Claims 9 to 11, **characterized in that** the position mark (7, 9) has at least one first detectable measuring edge (12) and a second detectable measuring edge (13), wherein the two edges (10, 11) run at an angle to each other, so that the distance (A) from the first measuring edge (12) to the second measuring edge (13) in the running direction (L) changes as the distance from the side edge (10, 11) changes, viewed transversely with respect to the running direction (L), wherein, by means of the detection of the distance (A) between the measuring edges (12, 13), it becomes possible to determine said transverse position of the sealing section (1, 2) or of the packaging material (4).

13. Device according to one of the preceding claims, **characterized in that** the device further comprises a sealing station which, with respect to the direction of movement of the film, seen from the folding device, is arranged upstream, wherein the sensor unit(s) is/are preferably arranged shortly before, in particular immediately before, the sealing station.

14. Device according to one of the preceding claims, **characterized in that** the device comprises at least one further sensor unit (6, 8), with which the transverse position of at least one side edge (10, 11) of the sealing sections (1, 2) can be detected,
wherein, by using the further sensor unit (6, 8), an error signal can be generated when the- at least one side edge (10, 11) lies outside a tolerance area and the side edge (10, 11) can be moved into the tolerance area by the positioning unit or an error signal can be output, and/or
wherein, by using the further sensor unit (6, 8), the transverse position of the at least one side edge (10, 11) can be detected and can be corrected in accordance with a predefined intended value.

15. Packaging material, in particular a film web, for use in a method and/or a device according to one of the preceding claims, **characterized in that** the packaging material (4) comprises at least one position mark (7), by using which the transverse position of the at least one sealing section (1, 2) or of the packaging material transversely with respect to the running direction (L) is detected, wherein the shape of the position mark changes with increasing distance in a direction which runs transversely or at an angle to the running direction (L), wherein said change is detected by the sensor unit (5) and the transverse position of the packaging material (4) or of the at least one sealing section (1, 2) is determined by using the change.

## Revendications

1. Procédé de détection de la position transversale d'au moins une portion de joint (1, 2) sur un matériau d'emballage (4), en particulier un emballage en film, et/ou la position transversale du matériau d'emballage (4) lui-même, le matériau d'emballage (4) étant déplacé le long d'une direction d'avance (L), la position transversale étant la position transversale à la direction d'avance (L), la position transversale de l'au moins une portion de joint (1, 2) ou du matériau d'emballage (4) étant détectée avec au moins une unité de capteur (5),
**caractérisé en ce que**
le matériau d'emballage (4) comprend au moins une marque de positionnement (7) à l'aide de laquelle la position transversale de l'au moins une portion de joint (1, 2) ou du matériau d'emballage (4) est détectée, la forme de la marque de positionnement (7) variant par rapport à une direction qui s'étend transversalement ou de manière inclinée par rapport à la direction d'avance (L), cette variation étant détectée par l'unité de capteur (5) et la position transversale du matériau d'emballage (4) ou de l'au moins une portion de joint (1, 2) étant déterminée à l'aide de cette variation.

2. Procédé selon la revendication 1, **caractérisé en ce qu'**une première marque de positionnement (7) disposée sur le matériau d'emballage (4), en particulier sur la première région de joint (1), est détectée avec une première unité de capteur (5) et une deuxième marque de positionnement (9) disposée sur le matériau d'emballage (4), en particulier sur la deuxième région de joint (2), est détectée avec une unité de capteur supplémentaire (16).

3. Procédé selon l'une quelconque des revendications précédentes, **caractérisé en ce que** la marque de positionnement (7) est réalisée de telle sorte qu'une distance (A) qui correspond à la longueur de la marque de positionnement dans la direction d'avance (L) varie avec la variation de la distance de l'arête latérale (10, 11), vu transversalement à la direction d'avance (L), de sorte que la position transversale de la portion de joint (1, 2) ou du matériau d'emballage (4) soit déterminée par le biais de la détection de la distance (A).

4. Procédé selon l'une quelconque des revendications précédentes, **caractérisé en ce que** la marque de positionnement (7, 9) présente au moins une première arête de mesure détectable (12) et une deuxième arête de mesure détectable (13), les deux arêtes (10, 11) s'étendant de manière inclinée l'une par rapport à l'autre de telle sorte que la distance (A) de la première arête de mesure (12) à la deuxième arête de mesure (13) dans la direction d'avance (L) varie avec la variation de la distance à l'arête latérale (10, 11), vu transversalement à la direction d'avance (L), ladite position transversale de la portion de joint (1, 2) ou du matériau d'emballage (4) étant déterminée par la détection de la distance (A) entre les arêtes de mesure (12, 13).

5. Procédé selon la revendication 4, **caractérisé en ce qu'**au moins l'une des arêtes de mesure (13) s'étend de manière inclinée ou coudée par rapport à la direction d'avance (L) du matériau d'emballage (4).

6. Procédé selon la revendication 1 ou 2, **caractérisé en ce que** la marque de positionnement (7) comprend une pluralité de bandes (15) de longueurs différentes qui sont disposées par rapport à la direction d'avance (L) de manière inclinée, en particulier transversalement et les unes derrière les autres, l'unité de capteur détectant un nombre différent de bandes (15) en fonction de la position transversale de la portion de joint (1, 2) ou du matériau d'emballage (4) et déterminant ainsi ladite position transversale des portions de joint (1, 2).

7. Procédé selon l'une quelconque des revendications précédentes, **caractérisé en ce qu'**après la détection de la position transversale des portions de joint (1, 2), les au moins deux portions de joint (1, 2) sont alignées par le biais d'une unité de positionnement et **en ce que** la position transversale des portions de joint (1, 2) l'une par rapport à l'autre et/ou par rapport à l'au moins une unité de capteur est ajustée par l'unité de positionnement sur la base de la détection par l'unité de capteur (5), et/ou **en ce qu'**éventuellement après l'alignement par l'unité de positionnement, les deux portions de joint (1, 2) sont scellées par l'unité de scellage.

8. Procédé selon l'une quelconque des revendications précédentes, **caractérisé en ce qu'**avec une unité de capteur supplémentaire (6), la position transversale d'au moins une arête latérale (10, 11) du matériau d'emballage (4) ou des portions de joint (1, 2) est détectée,
un signal pouvant de préférence être généré par l'unité de capteur supplémentaire (6) lorsque l'une des arêtes latérales (10, 11) se situe à l'extérieur d'un champ de tolérances prédéfini, le signal pouvant servir à ajuster la position transversale du matériau d'emballage (4) ou des portions de joint (1, 2), ou
un signal étant généré avec l'unité de capteur supplémentaire (8), lequel correspond à la position transversale effective des arêtes latérales (10, 11), le signal pouvant servir à ajuster la position transversale du matériau d'emballage (4) ou des portions de joint (1, 2).

9. Dispositif pour mettre en oeuvre un procédé selon les revendications 1 à 8, dans lequel le dispositif comprend au moins une unité de capteur (5), **caractérisé en ce que** le matériau d'emballage (4) comprend au moins une marque de positionnement (7), à l'aide de laquelle la position transversale de l'au moins une portion de joint (1, 2) ou du matériau d'emballage par rapport à la direction d'avance (L) peut être détectée, la forme de la marque de positionnement variant dans une direction qui s'étend transversalement ou de manière inclinée par rapport à la direction d'avance (L), cette variation pouvant être détectée par l'unité de capteur (5) et la position transversale du matériau d'emballage (4) ou de l'au moins une portion de joint (1, 2) pouvant être déterminée à l'aide de cette variation.

10. Dispositif selon la revendication 9, **caractérisé en ce que** le dispositif comprend deux unités de capteur (5, 16) pour détecter une marque de positionnement (7) disposée au niveau de la première région de joint (1) et une marque de positionnement supplémentaire (9) disposée au niveau de la deuxième région de joint (2).

11. Dispositif selon la revendication 9 ou 10, **caractérisé en ce que** la marque de positionnement (7) est réalisée de telle sorte qu'une distance (A) qui correspond à la longueur de la marque de positionnement dans la direction d'avance (L) varie avec la variation de la distance à l'arête latérale (10, 11), vu transversalement à la direction d'avance (L), de sorte que la position transversale de la portion de joint (1, 2) ou du matériau d'emballage (4) puisse être déterminée par le biais de la détection de la distance (A).

12. Dispositif selon l'une quelconque des revendications 9 à 11, **caractérisé en ce que** la marque de positionnement (7, 9) présente au moins une première arête de mesure détectable (12) et une deuxième arête de mesure détectable (13), les deux arêtes (10, 11) s'étendant de manière inclinée l'une par rapport à l'autre de telle sorte que la distance (A) de la première arête de mesure (12) à la deuxième arête de mesure (13) dans la direction d'avance (L) varie avec la variation de la distance à l'arête latérale (10, 11) transversalement à la direction d'avance (L), ladite position transversale de la portion de joint (1, 2) ou du matériau d'emballage (4) pouvant être déterminée par la détection de la distance (A) entre les arêtes de mesure (12, 13).

13. Dispositif selon l'une quelconque des revendications précédentes, **caractérisé en ce que** le dispositif comprend en outre un poste de scellement qui, par rapport à la direction de déplacement du film, vu depuis le dispositif de pliage, est disposé en aval, la ou les unités de capteur étant disposées de préférence juste avant, en particulier immédiatement avant le poste de scellement.

14. Dispositif selon l'une quelconque des revendications précédentes, **caractérisé en ce que** le dispositif comprend au moins une unité de capteur supplémentaire (6, 8) avec laquelle la position transversale d'au moins une arête latérale (10, 11) des portions de scellement (1, 2) peut être détectée,
un signal d'erreur pouvant être généré avec l'unité de capteur supplémentaire (6, 8) si l'au moins une arête latérale (10, 11) est située à l'extérieur d'un champ de tolérances et l'arête latérale (10, 11) pouvant être déplacée par l'unité de positionnement dans le champ de tolérances ou un signal d'erreur pouvant être émis, et/ou
la position transversale de l'au moins une arête latérale (10, 11) pouvant être détectée avec l'unité de capteur supplémentaire (6, 8) et une valeur de consigne prédéfinie pouvant être corrigée de manière correspondante.

15. Matériau d'emballage, en particulier bande de film pour l'utilisation dans un procédé et/ou un dispositif selon l'une quelconque des revendications précédentes, **caractérisé en ce que** le matériau d'emballage (4) comprend au moins une marque de positionnement (7) à l'aide de laquelle la position transversale de l'au moins une portion de joint (1, 2) ou du matériau d'emballage transversalement à la direction d'avance (L) peut être détectée, la forme de la marque de positionnement variant avec l'augmentation de la distance dans une direction qui s'étend transversalement de manière inclinée par rapport à la direction d'avance (L), cette variation étant détectée par l'unité de capteur (5) et la position transversale du matériau d'emballage (4) ou de l'au moins une portion de scellement (1, 2) étant déterminée à l'aide de la variation.
